# EUROPEAN PATENT SPECIFICATION

(11) **EP 4 275 476 B1**
(45) Date of publication and mention of the grant of the patent: **25.02.2026**
(21) Application number: 22172843.9
(22) Date of filing: 11.05.2022
(51) Int. Cl.: A01D 69/08, A01D 69/00, A01D 41/14, F16D 11/00, F16D 23/12

(54) **AGRICULTURAL HARVESTER WITH DRIVELINE COUPLING**
LANDWIRTSCHAFTLICHE ERNTEMASCHINE MIT ANTRIEBSKUPPLUNGSMECHANISMUS
MOISSONNEUSE AGRICOLE AVEC MÉCANISME DE COUPLAGE D'ENTRAÎNEMENT

(43) Date of publication of application: 15.11.2023
(73) Proprietor: CNH Industrial Belgium N.V., 8210 Zedelgem (BE)
(72) Inventor: JONGMANS, Dré, 4791 AG Klundert (NL); VAN OVERSCHELDE, Pieter, 8200 Sint-Andries (BE); DERUYTER, Lucas, 8830 Hooglede-Gits (BE); TALLIR, Frederik, 8600 Esen (Diksmuide) (BE); VERSCHAEVE, Bertl, 8830 Gits (BE); REUBENS, Sam, 8200 Sint-Michiels (BE); MISSOTTEN, Bart, 3020 Herent (BE)
(74) Representative: CNH Industrial IP Department

(56) References cited:
- EP-B1- 1 985 168
- DE-A1- 102013 011 834
- DE-A1- 2 124 341
- DE-A1- 2 307 698
- DE-A1- 2 412 819
- US-A1- 2012 317 951
- US-A1- 2014 237 971
- US-A1- 2016 360 698
- US-A1- 2018 168 102
- US-A1- 2020 205 341
- US-A1- 2022 046 858

## Description

### Field of the Invention

The present invention is related to agricultural harvesters such as combine harvesters or forage harvesters, in particular to the driveline for actuating the operation of a detachable header located at the front of the harvester.

### Background of the invention

Agricultural harvesters are machines designed for harvesting and processing crops such as wheat or corn. Crops are cut from the field on a wide area by a detachable header mounted to the feeder at the front of the harvester. In a combine harvester, the harvested material is brought to a central area of the header by an auger or a belt system included in the header, and from there it is transported by the feeder to a threshing mechanism comprising laterally or longitudinally mounted threshing rotors and further to the cleaning section comprising a number of sieves where grains are separated from any remaining crop residue.

A driveline from the harvester's power source to the header passes along one side of the feeder where it is coupled to a header driveline. The coupling of the header driveline to the main driveline is done manually in many harvesters existing today. This is a time-consuming operation which adds to the downtime when the header needs to be attached and detached from the main body of the harvester.

Automatic coupling mechanisms have been developed but they are often technically complex solutions which require additional movable components and/or actuators.

DE 23 07 698 A1 describes a coupling for a header driveline to the combine harvester driveline.

US 2022/046858 A1 describes a header drivelin coupling mechanism for a combine harvester.

### Summary of the invention

In view of the drawbacks of prior art systems as discussed above, it is desirable to provide a coupling mechanism for coupling the header driveline to the main driveline, that is a technically straightforward alternative to existing solutions This aim is achieved by a harvester, a header and a method as disclosed in the appended claims.

A harvester according to the invention comprises a header attached at the front face of a feeder mounted at the front of the main harvester body. The main driveline of the harvester is coupled to the driveline of the header by a releasable clutch, the first part thereof being located at the side of the feeder housing. Said first clutch part is rotatably coupled to a shaft that is part of the main driveline. The second clutch part is rotatably coupled to a header drive shaft that drives various components of the header such as the knives and the reel, or the row units of a corn header for example. According to the invention, the header comprises a spring-operated assembly comprising a holder that is pivotably connected to the header frame and a support arm that is movable relative to the holder along its own longitudinal axis.

The holder may for example be a tube-shaped holder with one end of the support arm inserted therein so that the arm can slide in and out of the holder. The second clutch part is pivotably connected to the support arm, for example to the second end of the support arm whose first end is inserted in the tube-shaped holder. According to an embodiment, the second clutch part is coupled to a rotary bearing (itself coupled to the header driveshaft) that is pivotable relative to a yoke attached at the end of the support arm. A spring maintains the support arm in a position lying upwards of the first clutch part when the clutch parts are separate from each other, i.e. when the header driveline is decoupled from the main driveline of the harvester. The holder is pivotable according to sufficient degrees of freedom to allow pulling the second clutch part from the upward position against the spring force and coupling it to the first clutch part at the side of the feeder. The spring-operated assembly furthermore enables the movement of the header relative to the feeder according to one or two degrees of freedom, while the clutch parts remain interlocked.

According to a preferred embodiment, the harvester further comprises an automatic coupling mechanism mounted on the side of the feeder housing, and configured to pull the second clutch part down from the upward position and couple it to the first clutch part without manual intervention.

### Brief description of the drawings

Figure 1 is a schematic sideview of a combine harvester, indicating a number of parts that are relevant for the invention.
Figure 2 shows one embodiment of a harvester according to the invention.
Figure 3 shows the characteristic components of the embodiment of Figure 2.
Figure 4 is a section view of one of the clutch parts of a dog clutch used in the embodiment of Figures 2 and 3.
Figures 5a and 5b are 3D-views of the automatic coupling mechanism applied in the embodiment of Figures 2 and 3, from different angles and in different positions of the mechanism.
Figures 6a and 6b are 3D views of the two clutch parts in mutually aligned positions, prior to the actual coupling.
Figures 7a to 7e illustrate the coupling sequence of the two clutch parts from the mutually aligned position to the coupled state.
Figures 8a to 8e illustrate the full coupling sequence executed by the automatic coupling mechanism shown in Figures 5a and 5b and including the clutch parts illustrated in Figures 6 and 7.
Figure 9 illustrates an alternative embodiment.

### Detailed description of preferred embodiments of the invention

Preferred embodiments will now be described with reference to the drawings. The detailed description is not limiting the scope of the invention, which is defined only by the appended claims. The terms 'front' and 'back' or 'rear' are referenced to the front and back side of the combine harvester. The 'forward direction' of the combine harvester refers not to a single geometrical axis but to the general direction from the rear of the vehicle to the front.

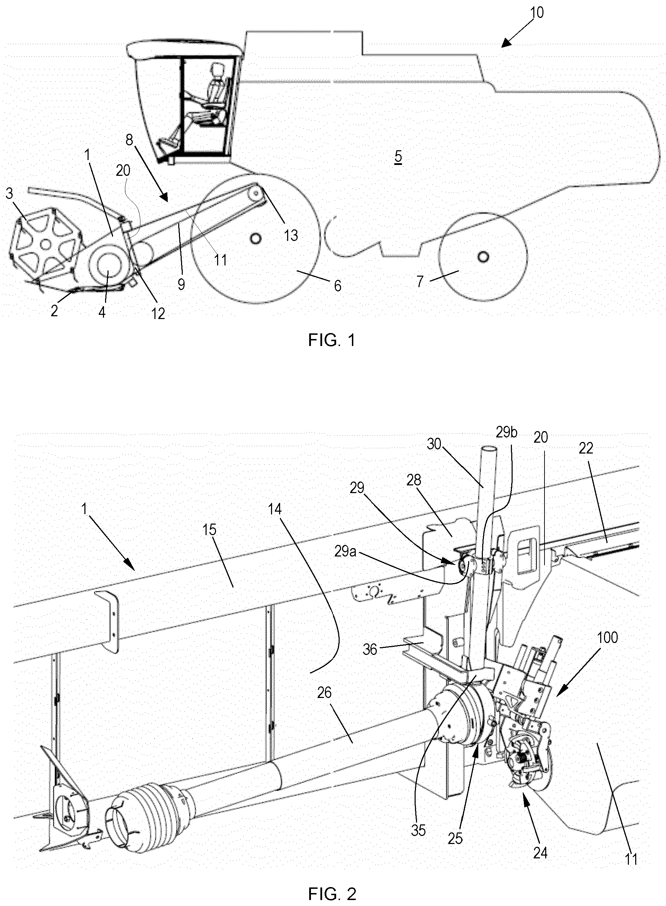

Figure 1 is a schematic image of a combine harvester 10 as known today, comprising a header 1 mounted at the front of the combine. The header comprises knives 2 maintained at a given height above ground level while the combine moves through a field of crops that are to be harvested. A rotating reel 3 guides the crops towards the knives. Cut crops are transported from both lateral sides of the header towards a central area by an auger 4. Alternatively, a set of draper belts may perform this function. The main body 5 of the combine is supported by front and rear wheels 6 and 7 and comprises the threshing and separation elements and cleaning section generally known by the skilled reader and not depicted as such in Figure 1. From the central area of the header 1, crops are transported into the main body 5 of the combine by a feeder 8. The feeder 8 is inclined upwards from the header 1 towards the main body 5 and comprises moving belts 9 inside a housing 11. The belts transport the crops upwards, from an inlet section 12 of the feeder to an outlet section 13. At the front, the feeder comprises a cradle frame 20, onto which the header 1 is mounted and secured. The cradle frame 20 may be fixedly attached to the feeder housing 11, or it may be movable, for example for allowing the header 1 to undergo a tilting movement and/or a sideways flotation relative to the feeder housing 11. The rotation of the reel 3 and the auger 4 is driven by the driveline of the header which is itself coupled to the main driveline of the combine as described in the introductory portion.

Figure 2 shows a detail of the left-hand side of the feeder housing 11, in a combine harvester according to an embodiment of the invention, equipped with a header 1 that is pivotable about two axes so that it can be tilted forward and backward relative to the feeder housing 11, as well as sideways, i.e. allowing a lateral flotation of the header 1. The cradle frame 20 is visible in the drawing. Also the header frame 14 is visible. This header frame 14 comprises an interlocking beam 15 that is supported by a cradle at the top of the cradle frame 20. The cradle frame 20 is attached to a tiltable front structure 22 of the feeder, said front structure being configured to pivot about an axis oriented transversely to the forward direction of the harvester. Actuators are present (not visible in Figure 1) for driving this pivoting motion of the front structure 22, thereby enabling a forward and backward tilting movement of the header 1. The cradle frame 20 itself is configured to pivot relative to the front structure 22 about an axis oriented in the forward direction of the combine, to enable the lateral flotation of the header 1. Actuators for driving the movements of the header are not shown but may be realized in accordance with known configurations.

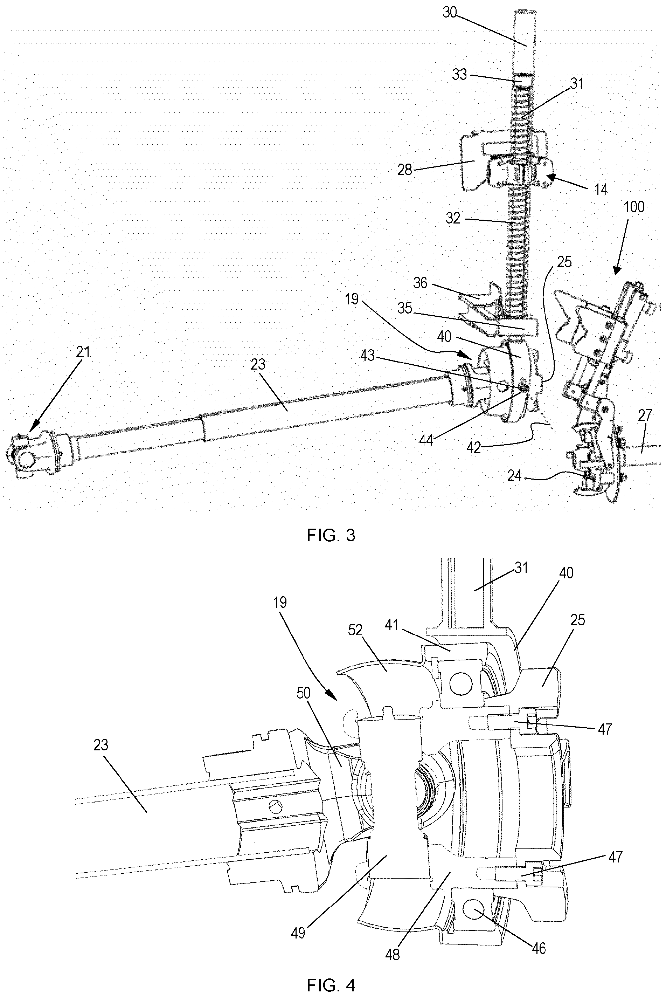

The driveline of the combine harvester, hereafter and in the claims referred to as the main driveline, is to be coupled to the driveline of the header by a releasable clutch comprising a first clutch part 24 emerging from the side of the feeder housing 11, and a second clutch part 25. The first clutch part 24 is mounted at the end of a shaft 27 (not visible in Figure 2 but shown in Figure 3) that runs transversely from the opposite side of the feeder housing 11 to the side that is visible in Figure 2. Said transverse shaft is the last of a sequence of rotatable components driven by a power source of the harvester and generally referred to in the present description as the 'main driveline' which may be realised in any manner known in the art. Said main driveline does not necessarily end with such a transverse shaft passing from one side of the feeder to the other and other known main driveline configurations are possible within the scope of the invention, including a main driveline comprising rotating elements on both sides of the feeder housing 11, ending in a 'first clutch part' 24 on each side of said housing 11 and wherein the characteristic elements of the invention are duplicated on both sides. It is to be noted however that in a harvester according to the invention, the first clutch part 24 is in a fixed position relative to the feeder housing 11, or to be more precise: the rotation axis of the first clutch part 24 is fixed relative to the feeder housing 11.

The header driveline is configured to be coupled to the main driveline through the releasable clutch and comprises the second clutch part 25 coupled to a telescoping rotatable header driveshaft. In Figure 2, the driveshaft is not directly visible as it is hidden inside a protective tube 26. Figure 3 does show the driveshaft 23 as such, without the protective tube 26. It is a telescopic shaft coupled by a first universal joint 19 to the second clutch part 25 and by a second universal joint 21 to further rotating components of the header, such as the reel 3, the auger 4 and the knives 2. The connection of the drive shaft 23 to the second clutch part 25 will be described in more detail later in this description.

As seen in Figure 2, the second clutch part 25 is coupled to a tube-shaped holder 30 (hereafter also abbreviated as 'tube' 30) that is pivotably connected to the back of the header frame 14. In the embodiment shown, the tube-shaped holder 30 is connected to the header frame 14 by a universal pivot joint 29, i.e. a joint that allows the holder 30 to pivot in any direction about a given pivot point. In the embodiment shown, the universal pivot joint 29 comprises a U-shaped bracket 29a that is rotatable about a first axis oriented perpendicularly to the header frame 14 and a clamp 29b into which the holder 30 is clamped, the clamp 29b being rotatably mounted between the legs of the bracket 29a, the clamp 29b being rotatable about a second axis oriented along the length of the header 1. Other realizations of a universal pivot joint are however applicable. The joint 29 is mounted on a bracket 28 welded or otherwise fixedly attached to the back of the header frame 14 and that allows sufficient freedom of movement to the holder 30 in its pivoting movement about said two axes.

The tube-shaped holder 30 is shown in transparent view in Figure 3, where it is seen to contain a support arm 31 that is movable relative to the tube-shaped holder 30 along its own longitudinal direction, i.e. the upper end of the support arm 31 is inserted in the holder 30 and the arm 31 can slide in and out of the tube 30. Said movement is however influenced by a coil spring 32 mounted between the lower end of the tube 30 and the upper end of the arm 31. As seen in the drawing, the arm 31 comprises an extension 33 at its upper end that is slidable like a piston inside the cylindrical interior of the tube 30. The spring 32 is fixed to this upper extension 33. The arm 31 and the spring 32 are inserted into the tube 30 with the lower end of the spring fixed to the lower end of the tube 30. The spring 32 is configured to hold the support arm 31 upwards when the header 1 is not operationally coupled to the feeder. This situation is illustrated in Figures 2 and 3, where it is seen that the support arm 31 is maintained in a storage position upwards of the first clutch part 24, with the lower end of the tube-shaped holder 30 inserted in a clamp 35, so that the pivoting of the holder 30 about pivot joint 29 is constrained.

The clamp 35 is also visible in Figure 2. It is attached to the header frame 14 by a bracket 36. In the embodiment shown, the clamp 35 is formed as a resilient jaw, configured to receive the tube 30 when the latter is pushed into the jaw of the clamp 35, and to maintain the tube 30 in that position. Removing the tube 30 from the clamp 35 requires pulling it sideways so as to overcome the clamping force. Other types of clamps are however possible within the broader scope of the present invention, as well as any other means for constraining the movement of the holder 30 about pivot joint 29, such as a magnetic contact or a spring-operated constraining mechanism for example. The storage position is an example of the 'first position upwards of the first clutch part 24' referred to in the appended claims. Said first position may however be any other position upwards of the first clutch part 24 wherein the support arm 31 is maintained upwards by the spring 32, and said position is therefore not necessarily defined by a clamp 35. According to other embodiments, no clamp is used and the support arm 31 is maintained in the upward position only by the spring 32.

Also visible in Figure 3 is the first clutch part 24 mounted at the end of the jackshaft 27 that runs transversely from one side of the feeder housing 11 to the other. It is seen that in order to couple the second clutch part 25 to the first clutch part 24, the second clutch part 25 needs to be pulled downward against the spring force exerted by the spring 32 on the support arm 31, and manipulated towards a position where it faces the first clutch part 24. Figures 2 and 3 show an automatic coupling mechanism 100 for performing said manipulation as well as the actual coupling of the clutch parts without any manual intervention. This mechanism will be described in more detail later in this description. However before going into these details, the manner is described in which the second clutch part 25 is connected to the lower end of the support arm 31. This is illustrated in Figure 3 and in the section view shown in Figure 4.

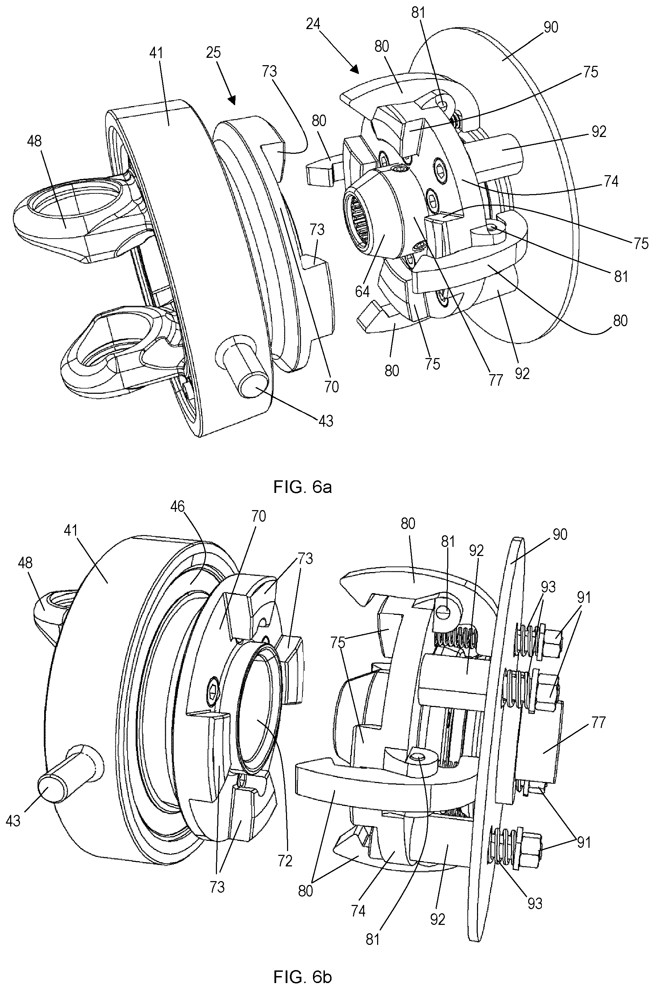

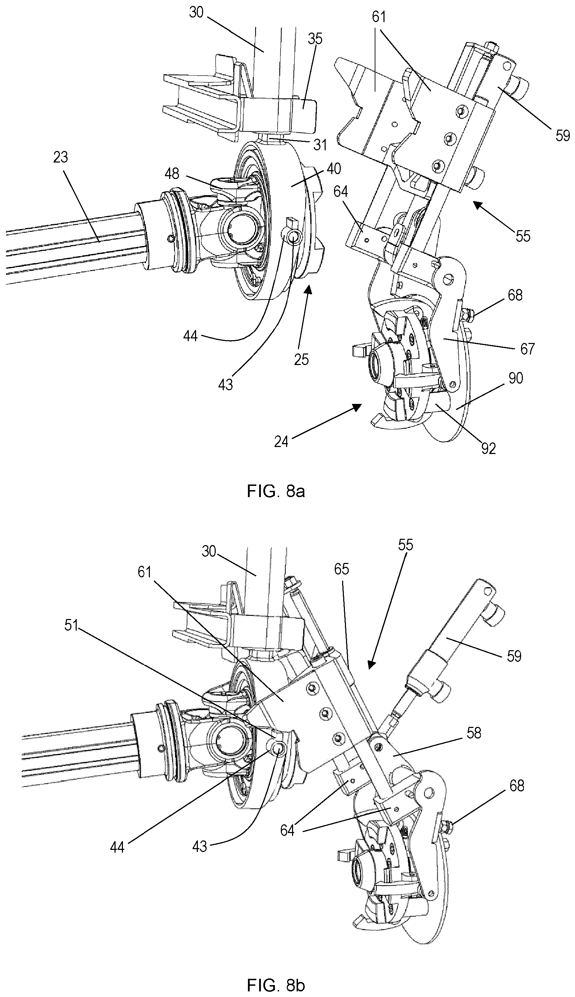

It is seen that a ring-shaped yoke 40 is integral with the support arm 31 at the lower end thereof, and that a bearing hub 41 is pivotably mounted inside said yoke 40. The bearing hub 41 is pivotable relative to the yoke 40 through a pair of pivot pins 43 fixed to the sides of the bearing hub 41 and pivotably inserted in a pair of cylindrical tube ends 44 attached on opposite lateral sides of the yoke 40. The pivot pins 43 and the tube ends 44 are better visible in Figures 6a,6b and 8a,8b.

The bearing hub 41 (and thereby the second clutch part 25) is pivotable about an axis 42 (see Figure 3) that is oriented transversely to the longitudinal direction of the header and to the rotation axis of the second clutch part 25. Preferably and in the embodiments shown in drawings, the axis 42 is perpendicular to the support arm 31 and to the rotation axis of the second clutch part 25.

This is however just one possible way of realising the feature according to which the second clutch part is 'pivotably coupled to the second end of the support arm', as stated in the appended claims. The clutch part could for example be pivotable about two orthogonal axes. In any case, the pivotable connection of the second clutch part 25 to the support arm 31 must be configured to enable the alignment of the second clutch part 25 to the first clutch part 24 and its subsequent rotatable coupling to said first clutch part. In the case of a movable header, it must also enable the header to move according to one or two degrees of freedom, while the clutch parts remain rotatably coupled.

The pivoting range of the bearing hub 41 relative to the yoke 40 may be limited by a stopper (not shown). The second clutch part 25 is rotatable relative to the bearing hub 41 via a ball bearing 46 mounted therein. In the embodiment shown, it is seen that the second clutch part 25 is the second part of a dog clutch, fixed by bolt connections 47 to a first fork portion 48 of the universal joint 19, the joint further comprising a cross piece 49 and a second fork portion 50 fixed to the outer end of the header drive shaft 23. These elements of a universal joint are well known as such. In the embodiment shown, a protective cap 52 attached to the side of the bearing hub 41 protects the joint 19 and the end of the tube 26 (Fig. 2) when the latter is mounted around the shaft 23.

The degrees of freedom defined by the pivot joint 29 and by the pivotable connection of the bearing hub 41 relative to the yoke 40, and the fact that the support arm 31 is movable linearly relative to the tube shaped holder 30 enable the forward and sideways tilting of the header 1 relative to the feeder housing 11 while the clutch parts 24 and 25 are rotatably interlocked, i.e. while the header driveline is coupled to the main driveline of the combine.

According to preferred embodiments, the support arm 31 is either free to twist about its own central longitudinal axis relative to the holder 30, or free to twist between given limits in order to maintain the orientation of the yoke 40 between said limits.

As stated above, the actual coupling of the clutch parts 24 and 25 requires pulling down the second clutch part 25 against the spring force exerted by the spring 32 until it is roughly aligned to the first clutch part 24, and effectively bringing the second clutch part 25 towards the first clutch part 24 and coupling the two. The invention is not limited to any specific type of rotatable clutch mechanism nor to a specific way of manipulating the support arm 31 and thereby the second clutch part 25 from an upward position towards the first clutch part 24 at the side of the feeder housing 11. According to embodiments of the invention, the pulling down of the second clutch part 25 is done manually by the operator and the coupling sequence is also done manually, by performing the necessary manipulations required for the clutch type that is being used.

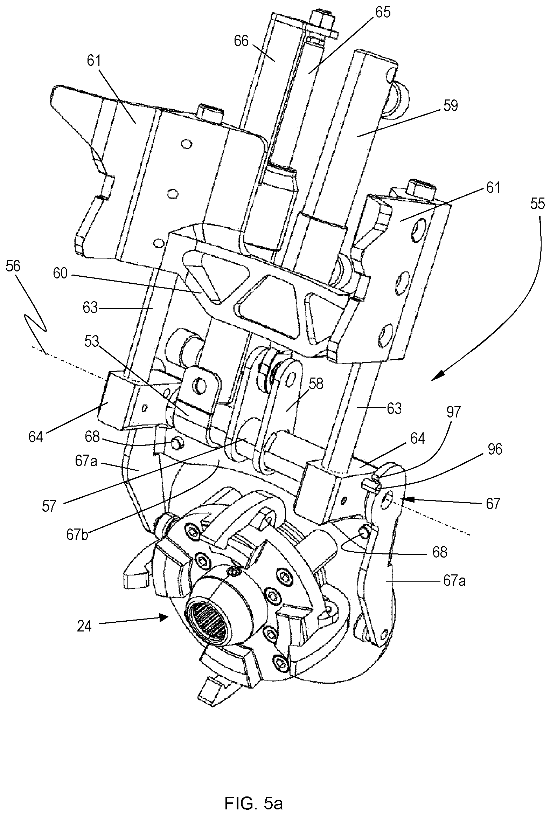

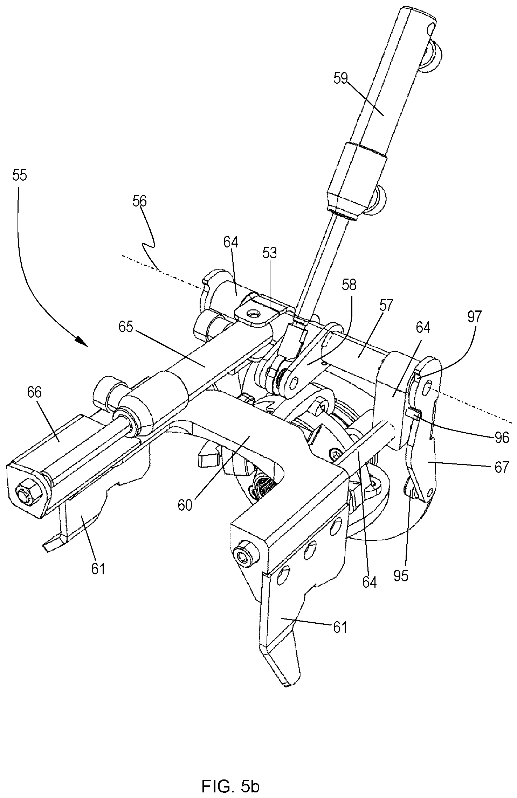

According to the embodiment shown in Figures 2 and 3 however, the second clutch part 25 is manipulated downward by an automatic coupling mechanism 100, that also effectuates the coupling (i.e. the secured rotatable interlocking) of the clutch parts, so that the coupling of the clutch parts takes place without manual intervention by an operator. This automatic coupling mechanism 100 will now be described in more detail, with reference also to the enlarged views shown in Figures 5a and 5b.

The mechanism 100 comprises a structure 55 that is pivotable with respect to the feeder housing 11. Figures 5a and 5b show two different positions of the structure 55 relative to the first clutch part 24. The structure 55 is pivotable about a pivot axis 56 that is in a fixed position relative to the feeder housing 11. The structure 55 may for example be mounted between two support brackets (not shown in Figure 2) attached to the side of the feeder housing 11. The structure 55 comprises a tube 57 that is concentrically arranged about the pivot axis 56. A lever arm 58 is fixed to the tube 57 in a more or less central position thereof. In the embodiment shown, the lever arm 58 consists of two parallel plate elements fixed to the tube 57. A first variable length actuator 59 is coupled between the feeder housing 11 and the lever arm 58 so that the extension of the actuator 59 tilts the pivotable structure 55 downward from the upright position shown in Figures 3 and 5a to the level position shown in Figure 5b. Retraction of the actuator 59 pulls the pivotable structure 55 back up to the upright position. The pivotable structure 55 further comprises a slidable gripper comprising a central bracket 60 and two hook-shaped gripping plates 61 mounted symmetrically with respect to the central plane of the structure 55. The gripper is slidable relative to a pair of guiding pins 63 fixed respectively to a pair of lever blocks 64 attached near the outer ends of the pivotable tube 57. The pivotable structure 55 further comprises a second variable length actuator 65, configured to drive the linear translation of the gripper 60/61 relative to the pins 63. The second actuator 65 is coupled at one end to the tube 57 via a support bracket 53 and at the other end to a support 66 that is fixed to or integral with the central bracket 60 of the gripper.

The mechanism 100 further comprises a lever structure 67 that is pivotable about the same axis 56 as the pivotable structure 55. The lever structure comprises a pair of lever arms 67a connected rigidly together by a transverse plate element 67b. Two adjustable stopper bolts 68 protrude through holes in the transverse plate element 67b and are fixed at a desired position by securing nuts. The function of this lever structure 67 will be discussed in more detail further in this description.

It is already clear from Figure 3 that the first actuator 59 has the function of pivoting the pivotable structure 55 from the upright position shown in Figures 3 and 5a towards the yoke 40, when the support arm 31 is in the storage position, in order for the gripping plates 61 to pull the holder 30 away from the clamp 35 and bring the yoke 40 and thereby the second clutch part 25 into rough alignment with the first clutch part 24. This grabbing movement is performed with the second actuator 65 in the extended state. From the roughly aligned position, the retraction of the second actuator 65 then moves the second clutch 25 towards the first clutch part until the two are rotatably interlocked.

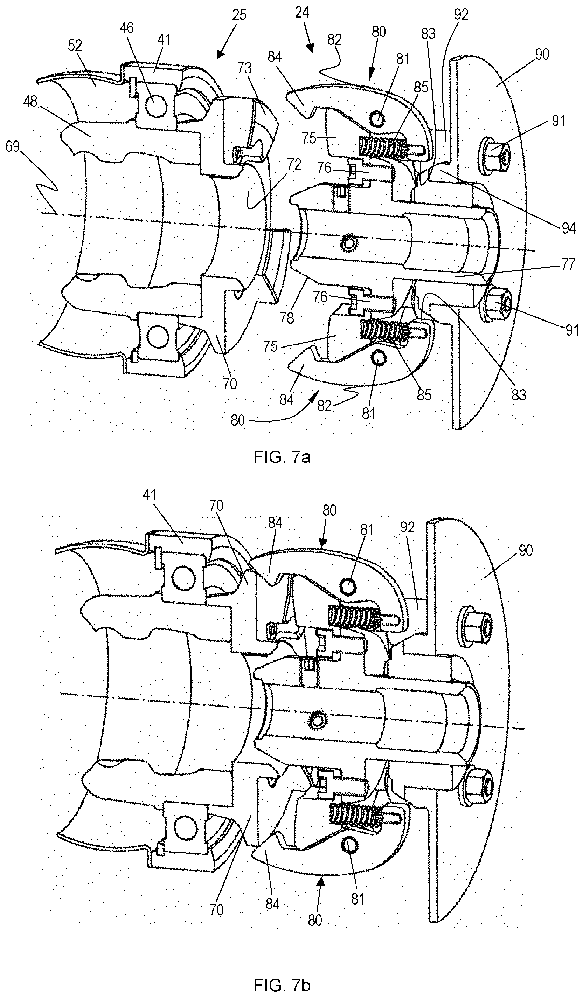

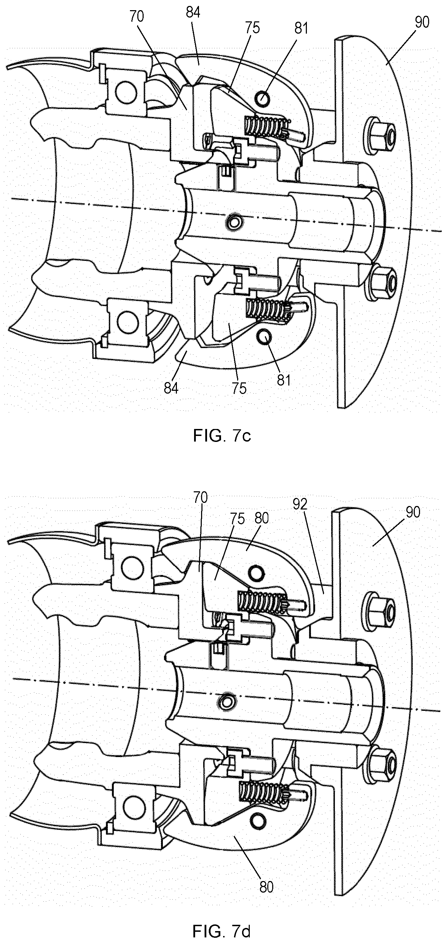

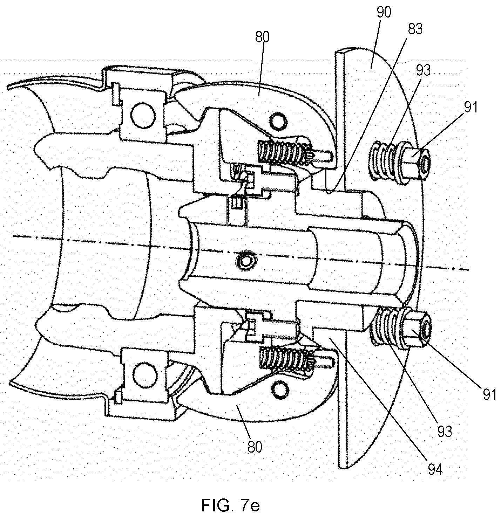

A number of features of the first clutch part 24 shown in Figures 3 and 5 have been developed especially in order to enable the above-described automatic coupling. Therefore the clutch parts applied in this particular embodiment are now looked at in more detail, with reference to Figures 6 and 7. It is to be remembered however that the invention is not limited to this particular clutch design.

Figures 6a, 6b and 7a show detailed images of the two clutch parts 24 and 25 facing each other prior to the actual coupling process. Both clutch parts are seen to be aligned according to a common axis 69 (see Fig. 7a), but it is to be understood that in reality a degree of misalignment is allowed and the perfect alignment is only established as the clutch parts are brought closer together. In Figures 6a and 6b, the second clutch part 25 is shown together with the bearing hub 41 comprising side pins 43 as described above which enable the hub 41 to pivot relative to the yoke 40. As also described above, the second clutch part 25 is fixed to the fork portion 48 of the universal joint 19 shown in Figure 4. The assembly of the fork portion 48 and the clutch part 25 is rotatable about axis 69 through ball bearing 46. The second clutch part 25 comprises a clutch plate 71 having a central opening 72 and four teeth 73 protruding outward from the clutch plate and arranged at regular angular intervals around the central opening 72.

The first clutch part 24 also comprises a clutch plate 74 having a central opening and four teeth 75 configured to interlock with the teeth 73 of the second clutch part 25. The first clutch part 24 is fixed by bolt connections 76 (see Fig. 7a) to a hollow tube 77 configured to be fixed to the end of the shaft 27 (not shown in Figures 6a, 6b and 7). The hollow tube 77 protrudes through the central opening in the clutch plate 74 of the first clutch part 24 and comprises a cone shaped end section 78 that is configured to be inserted in the central opening 72 of the second clutch part 25 to thereby effectuate the alignment of the clutch parts as the second part 25 is drawn closer to the first part 24. Four spring-operated hooks 80 are pivotably coupled to the back of the clutch plate 74 while protruding forward towards the front of said clutch plate 74, each hook overlapping one of the four teeth 75 of the first clutch part 24. Each of the hooks 80 is pivotable about a pivot pin 81, and comprises a curved outer surface 82 (see Fig. 7a) extending between a planar base surface 83 at the back of the hook, and a hook-shaped end portion 84 at the front of the hook. In the condition shown in Figure 7a, the hook-shaped end portions 84 are protruding forward in cantilever fashion from the rim of the teeth 75 and the hooks 80 are biased towards said condition by springs 85 mounted between the back of the clutch plate 74 and the end of the hooks 80.

A slidable push plate 90 is furthermore connected to the back of the clutch plate 74 by four bolt connections 91. The bolts 91 protrude through four tube elements 92 fixed (preferably welded) to the front side of the slidable plate 90. Four springs 93 are mounted between the heads of the respective bolts 91 and a support shoulder (not shown) inside the tube elements 92. In the condition illustrated in Figures 6a and 6b, the spring force exerted by the four springs 93 biases the slidable plate 90 in the direction of the clutch plate 74 so that the tube elements 92 determine the distance between the push plate 90 and the back of the clutch plate 74. The push plate 90 comprises a central collar 94 that is slidably arranged relative to the tube 77. In the condition shown in Figure 7a, the push plate 90 and the collar 94 have been pushed from left to right, against the spring force, compressing the springs 93 until the back of the push plate 90 contacts the heads of the bolts 91. This force is exerted through the interaction between the pivotable structure 55 and the lever structure 67, as will be described in more detail later. First however, the actual coupling sequence for interlocking the clutch parts 24 and 25 will be explained with reference to Figures 7b to 7e.

As seen in Figure 7b, the second clutch part 25 approaches the first clutch part 24. This movement is actuated by the second actuator 65 once the clutch parts have been roughly aligned. The cone-shaped front portion 78 of the tube 77 ensures the perfect alignment of the clutch parts by enabling the entry of said tube 77 inside the central opening 72 of the second clutch part 25. At the same time, the hook-shaped end portions 84 of the hooks 80 contact the rim of the clutch plate 70.

The hook-shaped portions 84 have inclined front and back surfaces. The angle of the inclined front surface is such that the continued mutual approach of the clutch parts forced by the actuator 65 causes the rim of the clutch plate 70 to force the hooks 80 to pivot upwards against the spring force exerted by the springs 85, as is illustrated in Figure 7c. The continued approach of the clutch parts then causes the hook-shaped end portions 84 to hook behind the rim of the clutch plate 70 of the second clutch part (see Figure 7d) while the teeth 73 and 75 of the clutch parts interlock. Preferably, the shaft 27 and thereby the tube 77 is made to rotate slowly during this process so that the interlocking of the teeth is facilitated. The springs 85 cause the hooks 80 to snap into the position shown in Figure 7d, to thereby establish a preliminary interlocking force between the clutch parts 24 and 25. Then the force that pushes the push plate 90 to the right is released, causing the springs 93 to push the plate 90 back towards the clutch plate 74 of the first clutch part 24 (see Figure 7e). The collar 94 is thereby pushed underneath the base surfaces 83 of the hooks 80, thereby obstructing the pivoting of the hooks 80 and securing the rotatable coupling between the clutch parts 24 and 25. The diameter of the collar 94 closely matches the position of the base surfaces 83 so that the collar 94 firmly blocks the hooks 80 into their positions. Preferably the collar 94 comprises a cone-shaped front portion that facilitates the entry of the collar 94 into the space between the base surfaces 83 and the outer surface of the tube 77. The stiffness of the springs 93 is configured to firmly maintain the coupling shown in Figure 7e during all operations of the header.

Reference is now made to Figures 8a to 8e, which illustrate the full coupling sequence realised with the automatic coupling mechanism 100 and starting from the point (see Figure 8a) where the second clutch part 25 is in the storage position while the pivotable structure 55 is tilted upwards. The second actuator 65 is fully extended and the first actuator 59 is fully retracted.

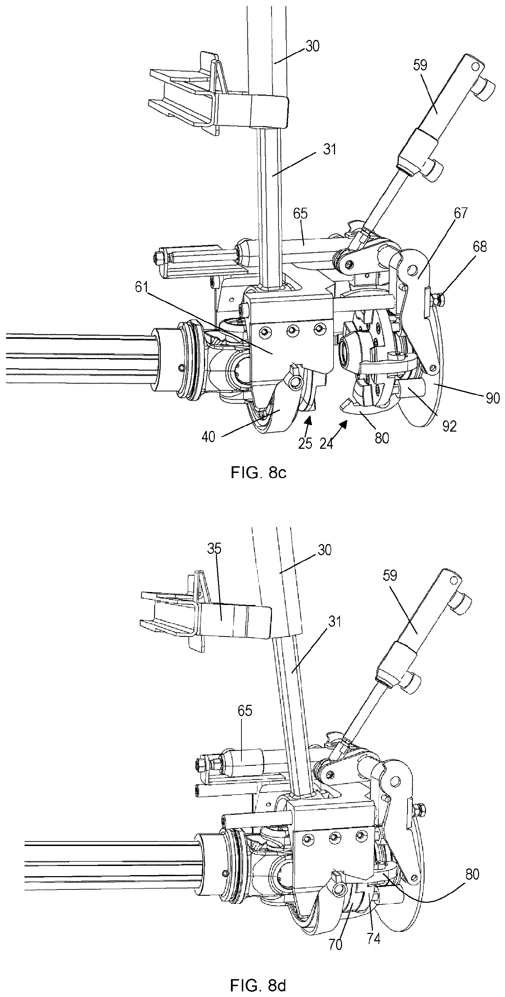

From this position, the first actuator 59 is extended in length, thereby tilting the pivotable structure 55 forward, in the direction of the second clutch part 25, as shown in Figure 8b. The hook-shaped plates 61 make contact with metal strips 51 welded on top of the tube ends 44 at the sides of the yoke 40, and as the pivoting motion of the structure 55 continues (see Figure 8c), the support arm 31 is pulled out of the holder 30, against the spring force exerted by the spring 32. In the position shown in Figure 8c, the first actuator 59 is fully extended, bringing the structure 55 into the level position shown also in Figure 5b. It is seen that at this point, the holder 30 is already partially pulled out of the clamp 35, while the second clutch part 25 is brought into a roughly aligned position with respect to the first clutch part 24.

The image shown in Figure 8c also clarifies the functionality of the lever structure 67. At the end of the angular movement actuated by the first actuator 59, the lever blocks 64 enter into contact with the end faces of the two bolts 68, thereby forcing the lever structure 67 to pivot about the pivot axis 56, from the position shown in Figures 8a and 8b to the position shown in Figure 8c. As seen in Figures 5a and 5b, at the lower ends of the lever arms 67a, rollers 95 are provided which are configured to maintain a rolling contact with the push plate 90. The pivoting of the lever structure 67 thereby pushes the push plate 90 against the spring force exerted by the springs 93. In other words, the first clutch part 24 is brought into the condition shown in Figure 7a : the push plate 90, including the tube elements 92, has been pushed to the right, enabling the rotation of the hooks 80 about their respective pivot pins 81.

Then (see Figure 8d) the second actuator 65 is retracted, causing the tube shaped holder 30 to be pulled fully out of the clamp 35, and the second clutch part 25 to approach the first clutch part 24 to the point where the teeth of the clutch parts are made to interlock and the hooks 80 establish a preliminary coupling by grabbing the edges of the clutch plate 70 of the second clutch part 25.

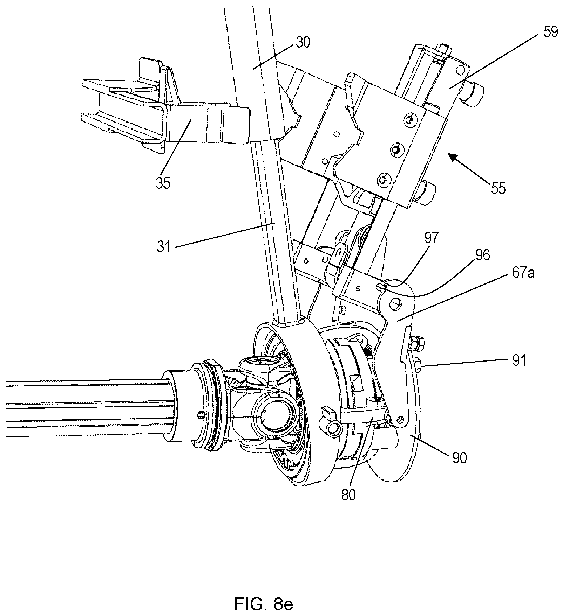

Finally (see Figure 8e), the pivoting structure 55 is tilted back upwards by retracting the first actuator 59, causing the push plate 90 to be moved back by the springs 93 until the tube elements 92 contact the back of the clutch plate 74, thereby blocking the hooks 80 and securing the coupled clutch parts 24 and 25. Near the end of the return movement of the pivotable structure 55, a pin 96 on each one the lever blocks 64 interlocks with a lip portion 97 at the top of the lever arms 67a, thereby repositioning the lever structure 67 at the correct starting position for a subsequent sequence. Items 96 and 97 are also indicated in Figures 5a and 5b.

The release of the clutch takes place by the reverse of the above-described sequence. From the position shown in Figure 8e, the pivotable structure 55 is tilted downward by the first actuator 59 until the hook-shaped plates 61 interact with the strips 51 on top of the tube ends 44 of the yoke 40 (as in Figure 8d). The lever structure 67 thereby again forces the push plate 90 to the right, thereby enabling the hooks 80 to pivot about their respective pivot pins 81. The second actuator 65 is then extended (as in Figure 8c), pulling the second clutch part 25 away from the first clutch part 24. The pulling force is sufficient to pivot the hooks 80 upwards through the interaction between the clutch plate 70 and the inclined back surface of the hook-shaped end portions 84 of the hooks 80. The hooks 80 pivot upwards and snap back into their starting positions once the clutch parts have been released. The pivotable structure 55 is then pivoted upwards by the first actuator 59, so that the support arm 31 is pulled upwards by the spring force exerted by the spring 32. The gripper plates 61 remain in contact with the yoke 40 until the support arm 31 reaches the storage position, with the holder 30 secured by the clamp 35 (as in Figure 8b). After that, the pivotable structure 55 is further pivoted upwards, until it reaches its initial position (as in Figure 8a). The position of the clamp 35 and the resilience of the clamp jaws are such that the holder 30 is pushed back into the clamp 35 by the upward movement of the pivotable structure 55.

As stated above, the header 1 in the embodiment shown in the drawings is movable according to two degrees of freedom : a forward and backward tilting and a lateral flotation. The invention is applicable also to a header that is movable only according to one degree of freedom, or to a header that is not movable relative to the feeder housing. However it is clear that the invention is especially advantageous in the case of a 2-degree of freedom header, given that the spring-operated assembly comprising the holder 30, the support arm 31 and the spring 32 is fully compatible with these movements when the clutch parts are coupled to each other. It is to be noted however that in the case of a movable header, it may be required to bring the header into a pre-defined position prior to starting the coupling sequence. For the embodiment shown in the drawings, the back of the header frame 14 needs to be placed essentially parallel to the front face of the feeder as otherwise the yoke 40 may be outside of the reach of the gripping plates 61.

When the header is not movable or movable only by flotation about a forwardly oriented axis, the universal pivot joint 29 could be replaced by a pivot joint enabling the holder to pivot only about an axis oriented parallel to the flotation axis.

The tube-shaped holder 30 could have a different shape, as long as it enables the movement of the support arm along its longitudinal direction relative to the holder. Instead of a mechanical spring 32, a gas spring could be applied for biasing the support arm upwards.

The tube ends 44 and the welded strips 51 are merely examples of suitable extensions formed on the sides of the yoke 40, and configured to interact with the gripper 60/61. These extensions could have other shapes.

Instead of the springs 93 arranged around the bolts 91, a single centrally arranged spring could be applied for biasing the push plate 90 towards the clutch plate 74 of the first clutch part 24.

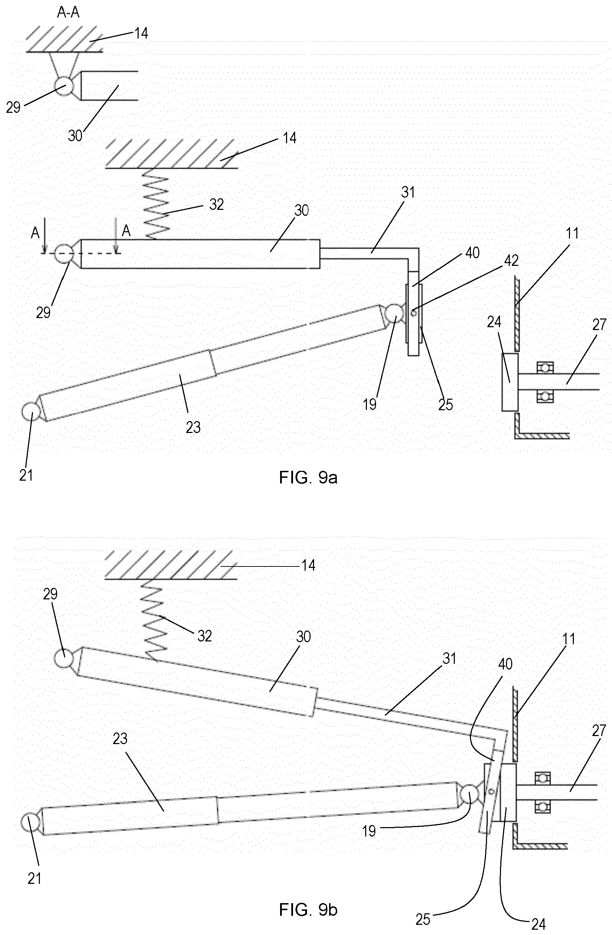

The invention is furthermore not limited to the embodiments as illustrated in the drawings, wherein the joint 29 enables the holder 30 and thereby the support arm 31 to pivot relative to a generally upright position of said holder and arm, and wherein the spring 32 is coupled between the holder 30 and the arm 31. Figures 9a and 9b illustrate an alternative embodiment wherein the tube-shaped holder 30 and thereby the arm 31 are pivotable relative to a generally level position. Figure 9a shows a simplified view of the tube-shaped holder 30 and the support arm 31 in a horizontal position, as seen from the front. The detail section A-A shows a top view of the connection of the holder 30 to the header frame 14. It is seen that the holder 30 is once again pivotably connected to the header frame 14 by a universal joint 29 (represented symbolically by a sphere-shaped symbol). This is required when the header 1 is movable relative to the feeder according to two degrees of freedom, otherwise the joint could be a one-dimensional pivot.

The support arm 31 is again movable linearly along its own central axis with respect to the holder 30. The arm 31 has a first end inserted in the holder 30 and a second end to which a circular yoke 40 is rigidly attached, oriented now at a right angle to the arm 31. The second clutch part 25 (represented in a simplified way as a rectangle), is pivotable relative to the yoke 40, about an axis 42, as was the case in the first embodiment. The header's telescopic drive shaft 23 is coupled to the second clutch part 25 by a universal joint 19 and coupled on its opposite side to the rotatable components of the header by a further universal joint 21, also as in the first embodiment.

The feeder housing 11 and the first clutch part 24 are also represented schematically in Figure 9a. The spring 32 is now coupled between the holder 30 and the header frame 14. The situation shown in Figure 9a represents an example of the 'first position', as referred to in the claims, of the second clutch part 25, i.e. a position wherein the second clutch part is not coupled to the first clutch part 24 and located upwards thereof. The support arm 31 is not necessarily horizontal in this first position. It could for example be tilted upwards (from left to right in the drawing) to some degree while still remaining in a generally level position. Also, a clamp could be provided for maintaining the holder 30 in a given upward position, serving as a storage position for the arm 31 and second clutch part 25.

As illustrated in Figure 9b, coupling the second clutch part 25 to the first clutch part 24 again requires pulling down the support arm 31 from the first position, against the spring force exerted by the spring 32, towards a second position wherein the second clutch part 25 is roughly aligned to the first clutch part 24. This is then followed by moving the second clutch part 25 closer to the first clutch part 24 and rotatably coupling the two parts. The same automatic coupling mechanism 100 described above may be used for performing the coupling sequence without manual intervention. The mechanism 100 is not shown in Figures 9a and 9b but could be included in the same way as described for the first embodiment. Alternatively, the second clutch part 25 could be moved manually from the first position to the second position and could then be manually coupled to the first clutch part 24. When the mechanism 100 is included, the clutch could be the same dog clutch described above, provided with the same securing elements : the hooks 80 and the spring-operated push plate 90.

As in the first embodiment, once the clutch parts 24 and 25 are rotatably coupled as shown in Figure 9b, the movement of the header relative to the feeder according to two degrees of freedom is enabled while the clutch parts remain coupled. Preferably, the support arm 31 is either free to twist about its own central longitudinal axis relative to the holder 30, or free to twist between given limits. The linear movement of the support arm 31 relative to the holder 30 is preferably limited by a stopper to prevent the arm from becoming detached from the holder. Possibly an additional spring (in addition to spring 32) could be coupled between the arm 31 and the holder 30, said additional spring acting to pull the arm 31 into the holder 30 when second clutch part 25 is in an upward position relative to the first clutch part 24.

The spring-operated assembly comprising the holder 30, the support arm 31 and the spring 32, according to any of the above-described embodiments enables coupling the clutch parts whilst enabling the movement of the header according to 2 degrees of freedom. Compared to existing systems, the assembly is technically straightforward. An additional advantage is that the assembly (30,31,32) can be retrofitted on each combine with a manual driveline connection. This is true also for the automatic coupling mechanism 100.

The invention is applicable to any type of agricultural harvester that comprises a feeder and a detachable header, such as a combine harvester or a forage harvester.

Generally, rotatably coupling the second clutch part 25 to the first clutch part 24 according to any of the embodiments described above is part of a sequence of actions performed according to the method of the invention for operatively coupling the header to the front of the feeder. This sequence is the following :
- placing the header on the ground. The header is for example placed on a dedicated spot on the field,
- driving the harvester towards the header,
- mechanically coupling the header frame to the feeder. This may be done according to any known coupling mechanism. Preferably, and with reference to Figures 1 and 2, the harvester approaches the header 1 with the feeder 8 in a low position, until the cradle frame 20 is positioned underneath the beam 15 of the header frame 14. Then the feeder is tilted upward so that the header is lifted up from the ground. Then the header frame is secured against the front face of the feeder by securing mechanisms not shown in the drawings but known as such in the art.
- moving the second clutch part 25 from the first position to the second position,
- rotatably coupling the second clutch part to the first clutch part.

The last two steps are taken in accordance with any one of the embodiments described above or equivalent thereto. According to embodiments wherein the header is movable relative to the feeder housing, the method may comprise the additional step of positioning the header in a suitable position relative to the feeder before moving the second clutch part 25 from the first position and coupling it to the first clutch part 24.

## Claims

1. An agricultural harvester comprising :
• a feeder (8) at the front of the harvester, the feeder comprising a housing (11),
• a main driveline rotatably coupled to a power source of the harvester and comprising a first rotatable part (24) of a releasable clutch that is accessible at the side of the feeder housing (11) and that is rotatable about a rotation axis, said rotation axis being in a fixed position relative to the feeder housing (11),
• a header (1) that is removably attached to a front portion of the feeder, and that comprises a header frame (14), and a header driveline that includes a header drive shaft (23) that is rotatably coupled to a second rotatable clutch part (25) of said clutch, the second clutch part (25) being configured to be releasably coupled to the first clutch part (24), to thereby rotatably couple the header driveline to the main driveline,
the header (1) further comprising :
- a holder (30) that is pivotably connected to the header frame (14),
- a support arm (31) having a first end and a second end, wherein the second clutch part (25) is pivotably coupled to said second end, and wherein the support arm (31) is movable in its longitudinal direction relative to the holder (30),
- a spring (32) configured to maintain the support arm (31) and thereby the second clutch part (25) in a first position upwards of the first clutch part (24), when the header driveline is decoupled from the main driveline,
and wherein the holder (30), the support arm (31) and the spring (32) are configured so that coupling the first and second clutch parts (24,25) is enabled by performing the following consecutive actions :
o moving the support arm (30) from said first position to a second position in which the second clutch (25) part faces the first clutch part (24), said movement of the support arm (31) taking place against the spring force exerted by the spring (32),
o moving the second clutch part (25) towards the first clutch part (24) and rotatably coupling the clutch parts (24,25)
**characterized in that**
the harvester further comprises a coupling mechanism (100) configured to pull the support arm (31) down from said first position towards said second position, and to rotatably couple the first and second clutch parts (24,25).

2. The harvester according to claim 1, wherein the holder (30) is connected to the header frame (14) by a universal pivot joint (29).

3. The harvester according to claim 1 or 2, wherein the header (1) comprises a clamp (35) for maintaining the second clutch part (25) in a storage position, said storage position being said first position upwards of the first clutch part (24).

4. The harvester according to any one of the preceding claims, wherein the holder is a tube-shaped holder (30) and wherein the first end of the support arm (31) is inserted in said holder and wherein the support arm (31) is linearly movable relative to the holder whilst remaining parallel to the holder (30).

5. The harvester according to any one of the preceding claims, wherein :
- a yoke (40) is fixed to or uniform with the second end of the support arm (31),
- the second clutch part (25) is rotatable relative to a bearing hub (41) and
- the bearing hub (41) is pivotable relative to the yoke (40) about a pivot axis (42) oriented perpendicularly to the support arm (31) and to the rotation axis of the second clutch part (25).

6. The harvester according to any one of the preceding claims, wherein said first and second end of the support arm (31) are respectively the upper end and the lower end of the arm (31), and wherein the spring (32) is coupled between the support arm (31) and the holder (30) so that moving the support arm (31) from the first to the second position requires pulling the arm down relative to the holder (30) against the spring force exerted by the spring (32).

7. The harvester according to any one of claims 1 to 5, wherein the spring (32) is coupled between the holder (30) and the header frame (14) so that moving the support arm (31) from the first to the second position requires pulling the arm (31) and the holder (30) down relative to the header frame (14), against the spring force exerted by the spring (32).

8. The harvester according to any of the preceding claims, wherein said coupling mechanism (100) comprises :
- a pivotable structure (55) that is pivotable about an axis (56) that is in a fixed position relative to the feeder housing (11),
- a first actuator (59) for actuating the pivoting movement of the pivotable structure (55),
and wherein :
- the pivotable structure (55) comprises a gripper (60,61) and a second actuator (65) configured to move the gripper so that the gripper can be extended away from or retracted towards the pivot axis (56) of the pivotable structure (55),
- the gripper (60,61) is configured to grab and pull down the support arm (30) from the first position to the second position when the pivotable structure (55) is pivoted from an upward position to a level position while the gripper is in an extended position relative to said pivot axis (56),
- the second actuator (65) is configured to move the gripper from said extended position towards a retracted position when the pivotable structure (55) is in the level position, to thereby couple the first and second clutch parts (24,25).

9. The harvester according to claim 8 combined with claim 5, wherein the yoke (40) comprises lateral extensions (44,51) positioned so that the gripper (60,61) interacts with said extensions.

10. A method for coupling a header (1) to the feeder (8) at the front of a harvester according to any one of claims 1 to 9, the method comprising the steps of :
- placing the header (1) on the ground,
- driving the harvester towards the header (1)
- mechanically coupling the header frame (14) to the feeder (8),
- pull the support arm (31) down from said first position towards said second position with the coupling mechanism (100), and rotatably couple the first and second clutch parts (24,25).

## Patentansprüche

1. Landwirtschaftliche Erntemaschine, umfassend:
• eine Zuführeinrichtung (8) an der Vorderseite der Erntemaschine, wobei die Zuführeinrichtung ein Gehäuse (11) umfasst,
• einen Hauptantriebsstrang, der drehbar mit einer Antriebsquelle der Erntemaschine gekoppelt ist und einen ersten drehbaren Teil (24) einer lösbaren Kupplung umfasst, der an der Seite des Gehäuses (11) der Zuführeinrichtung zugänglich ist und um eine Rotationsachse drehbar ist, wobei sich die Rotationsachse in einer festen Position relativ zum Gehäuse (11) der Zuführeinrichtung befindet,
• einen Erntevorsatz (1), der lösbar an einem vorderen Abschnitt der Zuführeinrichtung angebracht ist und einen Erntevorsatzrahmen (14) sowie einen Erntevorsatzantriebsstrang umfasst, der eine Erntevorsatzantriebswelle (23) umfasst, die drehbar mit einem zweiten drehbaren Kupplungsteil (25) der Kupplung gekoppelt ist, wobei der zweite Kupplungsteil (25) dazu eingerichtet ist, lösbar mit dem ersten Kupplungsteil (24) gekoppelt zu werden, um dadurch den Erntevorsatzantriebsstrang drehbar mit dem Hauptantriebsstrang zu koppeln,
wobei der Erntevorsatz (1) weiterhin umfasst:
- einen Halter (30), der schwenkbar mit dem Erntevorsatzrahmen (14) verbunden ist,
- einen Stützarm (31) mit einem ersten Ende und einem zweiten Ende, wobei der zweite Kupplungsteil (25) schwenkbar mit dem zweiten Ende gekoppelt ist, und wobei der Stützarm (31) in seiner Längsrichtung relativ zum Halter (30) bewegbar ist,
- eine Feder (32), die dazu eingerichtet ist, den Stützarm (31) und dadurch den zweiten Kupplungsteil (25) in einer ersten Position oberhalb des ersten Kupplungsteils (24) zu halten, wenn der Erntevorsatzantriebsstrang vom Hauptantriebsstrang entkoppelt ist,
und wobei der Halter (30), der Stützarm (31) und die Feder (32) derart ausgebildet sind, dass das Koppeln des ersten und zweiten Kupplungsteils (24, 25) durch das Ausführen der folgenden aufeinanderfolgenden Schritte ermöglicht wird:
o Bewegen des Stützarms (31) aus der ersten Position in eine zweite Position, in der der zweite Kupplungsteil (25) dem ersten Kupplungsteil (24) gegenüberliegt, wobei diese Bewegung des Stützarms (31) gegen die von der Feder (32) ausgeübte Federkraft erfolgt,
o Bewegen des zweiten Kupplungsteils (25) in Richtung des ersten Kupplungsteils (24) und drehbares Koppeln der Kupplungsteile (24, 25),
**dadurch gekennzeichnet, dass**
die Erntemaschine weiterhin einen Koppelmechanismus (100) umfasst, der dazu eingerichtet ist, den Stützarm (31) aus der ersten Position in Richtung der zweiten Position nach unten zu ziehen und den ersten und den zweiten Kupplungsteil (24, 25) drehbar zu koppeln.

2. Erntemaschine nach Anspruch 1, wobei der Halter (30) über ein Universalgelenk (29) mit dem Erntevorsatzrahmen (14) verbunden ist.

3. Erntemaschine nach Anspruch 1 oder 2, wobei der Erntevorsatz (1) eine Klemme (35) umfasst, um den zweiten Kupplungsteil (25) in einer Lagerposition zu halten, wobei die Lagerposition die erste Position oberhalb des ersten Kupplungsteils (24) ist.

4. Erntemaschine nach einem der vorhergehenden Ansprüche, wobei der Halter ein rohrförmiger Halter (30) ist und wobei das erste Ende des Stützarms (31) in den Halter eingeführt ist und wobei der Stützarm (31) relativ zum Halter linear bewegbar ist, während er parallel zum Halter (30) bleibt.

5. Erntemaschine nach einem der vorhergehenden Ansprüche, wobei:
- ein Gabelkopf (40) am zweiten Ende des Stützarms (31) befestigt oder einstückig damit ausgebildet ist,
- der zweite Kupplungsteil (25) relativ zu einer Lagerbuchse (41) drehbar ist und
- die Lagerbuchse (41) relativ zum Gabelkopf (40) um eine Schwenkachse (42) schwenkbar ist, die senkrecht zum Stützarm (31) und zur Rotationsachse des zweiten Kupplungsteils (25) ausgerichtet ist.

6. Erntemaschine nach einem der vorhergehenden Ansprüche, wobei das erste und das zweite Ende des Stützarms (31) das obere Ende bzw. das untere Ende des Arms (31) sind, und wobei die Feder (32) derart zwischen den Stützarm (31) und den Halter (30) gekoppelt ist, dass das Bewegen des Stützarms (31) von der ersten in die zweite Position das Herunterziehen des Arms relativ zum Halter (30) gegen die von der Feder (32) ausgeübte Federkraft erfordert.

7. Erntemaschine nach einem der Ansprüche 1 bis 5, wobei die Feder (32) derart zwischen den Halter (30) und den Erntevorsatzrahmen (14) gekoppelt ist, dass das Bewegen des Stützarms (31) von der ersten in die zweite Position das Herunterziehen des Arms (31) und des Halters (30) relativ zum Erntevorsatzrahmen (14) gegen die von der Feder (32) ausgeübte Federkraft erfordert.

8. Erntemaschine nach einem der vorhergehenden Ansprüche, wobei der Koppelmechanismus (100) umfasst:
- eine schwenkbare Struktur (55), die um eine Achse (56) schwenkbar ist, die sich relativ zum Gehäuse (11) der Zuführeinrichtung in einer festen Position befindet,
- einen ersten Aktuator (59) zum Betätigen der Schwenkbewegung der schwenkbaren Struktur (55),
und wobei:
- die schwenkbare Struktur (55) einen Greifer (60, 61) und einen zweiten Aktuator (65) umfasst, der dazu eingerichtet ist, den Greifer so zu bewegen, dass der Greifer relativ zur Schwenkachse (56) der schwenkbaren Struktur (55) von dieser weg oder zu dieser hin bewegt werden kann,
- der Greifer (60, 61) dazu eingerichtet ist, den Stützarm (31) aus der ersten Position in die zweite Position nach unten zu ziehen, wenn die schwenkbare Struktur (55) von einer oberen Position in eine horizontale Position geschwenkt wird, während sich der Greifer in einer bezüglich der Schwenkachse (56) ausgefahrenen Position befindet,
- der zweite Aktuator (65) dazu eingerichtet ist, den Greifer aus der ausgefahrenen Position in eine eingefahrene Position zu bewegen, wenn sich die schwenkbare Struktur (55) in der horizontalen Position befindet, um dadurch den ersten und den zweiten Kupplungsteil (24, 25) zu koppeln.

9. Erntemaschine nach Anspruch 8 in Kombination mit Anspruch 5, wobei der Gabelkopf (40) seitliche Erweiterungen (44, 51) umfasst, die derart angeordnet sind, dass der Greifer (60, 61) mit den Erweiterungen zusammenwirkt.

10. Verfahren zum Koppeln eines Erntevorsatzes (1) an die Zuführeinrichtung (8) an der Vorderseite einer Erntemaschine nach einem der Ansprüche 1 bis 9, umfassend die Schritte:
- Platzieren des Erntevorsatzes (1) auf dem Boden,
- Heranfahren der Erntemaschine an den Erntevorsatz (1),
- mechanisches Koppeln des Erntevorsatzrahmens (14) mit der Zuführeinrichtung (8),
- Herunterziehen des Stützarms (31) aus der ersten Position in Richtung der zweiten Position mittels des Koppelmechanismus (100) und drehbares Koppeln des ersten und des zweiten Kupplungsteils (24, 25).

## Revendications

1. Une moissonneuse agricole comprenant :
• un dispositif d'alimentation (8) à l'avant de la moissonneuse, le dispositif d'alimentation comprenant un boîtier (11),
• une ligne de transmission principale couplée de manière rotative à une source d'énergie de la moissonneuse et comprenant une première partie rotative (24) d'un embrayage débrayable accessible sur le côté du boîtier du dispositif d'alimentation (11) et pouvant tourner autour d'un axe de rotation, ledit axe de rotation étant dans une position fixe par rapport au boîtier du dispositif d'alimentation (11),
• une tête de coupe (1) fixée de manière amovible à une partie avant du dispositif d'alimentation, et qui comprend un châssis de tête (14), ainsi qu'une ligne d'entraînement de tête qui comprend un arbre d'entraînement de tête (23) couplé de manière rotative à une seconde pièce d'embrayage rotative (25) dudit embrayage, la seconde pièce d'embrayage (25) étant configurée pour être couplée de manière débrayable à la première pièce d'embrayage (24), en vue de coupler de manière rotative la ligne d'entraînement de la tête de coupe à la ligne de transmission principale,
la tête de coupe (1) comprenant en outre :
- un support (30) relié de manière pivotante au châssis de tête de coupe (14),
- un bras de support (31) comportant une première extrémité et une seconde extrémité, dans lequel la seconde pièce d'embrayage (25) est couplée de manière pivotante à ladite seconde extrémité, et où le bras de support (31) est mobile dans sa direction longitudinale par rapport au support (30),
- un ressort (32) configuré pour maintenir le bras de support (31) et donc la seconde pièce d'embrayage (25) dans une première position au-dessus de la première pièce d'embrayage (24), lorsque la ligne d'entraînement de la tête de coupe est découplée de la ligne de transmission principale,
et où le support (30), le bras de support (31) et le ressort (32) sont configurés de manière à permettre de coupler les première et seconde pièces d'embrayage (24, 25) en effectuant les actions consécutives suivantes :
o déplacer le bras de support (31) de ladite première position vers une seconde position dans laquelle la seconde pièce d'embrayage (25) fait face à la première pièce d'embrayage (24), ledit mouvement du bras de support (31) s'effectuant à l'encontre de la force exercée par le ressort (32),
o déplacer la seconde pièce de l'embrayage (25) vers la première pièce de l'embrayage (24) et coupler de manière rotative les pièces de l'embrayage (24, 25) ;
**caractérisé en ce que**
la moissonneuse comprend en outre un mécanisme de couplage (100) configuré pour tirer le bras de support (31) vers le bas depuis ladite première position vers ladite seconde position, ainsi que pour coupler de manière rotative les première et seconde pièces d'embrayage (24, 25).

2. La moissonneuse selon la revendication 1, dans laquelle le support (30) est relié au châssis de la tête de coupe (14) par un joint pivotant universel (29).

3. La moissonneuse selon la revendication 1 ou 2, dans laquelle la tête de coupe (1) comprend une pince (35) pour maintenir la seconde pièce d'embrayage (25) dans une position de stockage, ladite position de stockage étant ladite première position au-dessus de la première pièce d'embrayage (24).

4. La moissonneuse selon une quelconque des revendications qui précèdent, dans laquelle le support est un support tubulaire (30) et dans laquelle la première extrémité du bras de support (31) est insérée dans ledit support et dans laquelle le bras de support (31) est mobile linéairement par rapport au support tout en restant parallèle au support (30).

5. La moissonneuse selon une quelconque des revendications qui précèdent, dans laquelle :
- un étrier (40) est fixé à ou uniforme avec la seconde extrémité du bras de support (31),
- la seconde pièce d'embrayage (25) peut tourner par rapport à un moyeu de palier (41), et
- le moyeu de palier (41) peut pivoter par rapport à l'étrier (40) autour d'un axe de pivotement (42) orienté perpendiculairement au bras de support (31) et à l'axe de rotation de la seconde pièce d'embrayage (25).

6. La moissonneuse selon une quelconque revendication parmi celles qui précèdent, dans laquelle lesdites première et seconde extrémités du bras de support (31) sont respectivement l'extrémité supérieure et l'extrémité inférieure du bras (31), et dans laquelle le ressort (32) est couplé entre le bras de support (31) et le support (30) de telle sorte que le déplacement du bras de support (31) de la première à la seconde position nécessite de tirer le bras vers le bas par rapport au support (30) à l'encontre de la force exercée par le ressort (32).

7. La moissonneuse selon une quelconque des revendications de 1 à 5, dans laquelle le ressort (32) est couplé entre le support (30) et le châssis de la tête de coupe (14) de telle sorte que le déplacement du bras de support (31) de la première à la seconde position nécessite de tirer le bras (31) et le support (30) vers le bas par rapport au châssis de la tête de coupe (14), à l'encontre de la force exercée par le ressort (32).

8. La moissonneuse selon une quelconque des revendications parmi celles qui précèdent, dans laquelle ledit mécanisme de couplage (100) comprend :
- une structure pivotante (55) qui peut pivoter autour d'un axe (56) et se trouve dans une position fixe par rapport au boîtier d'alimentation (11),
- un premier actionneur (59) destiné à actionner le mouvement de pivotement de la structure pivotante (55),
et où :
- la structure pivotante (55) comprend un grappin (60, 61) et un second actionneur (65) configuré pour déplacer le grappin de manière à ce que celui-ci puisse être déployé ou rétracté par rapport à l'axe de pivotement (56) de la structure pivotante (55),
- le grappin (60, 61) est configuré pour saisir et tirer vers le bas le bras de support (30) de la première position vers la seconde position lorsque la structure pivotante (55) pivote d'une position relevée vers une position horizontale tandis que le grappin est dans une position étendue par rapport audit axe de pivotement (56),
- le second actionneur (65) est configuré pour déplacer le grappin de ladite position étendue vers une position rétractée lorsque la structure pivotante
(55) est dans la position horizontale, pour ainsi coupler les première et seconde pièces d'embrayage (24, 25).

9. La moissonneuse selon la revendication 8 combinée à la revendication 5, dans laquelle l'étrier (40) comprend des extensions latérales (44, 51) positionnées de manière à ce que le grappin (60, 61) interagisse avec lesdites extensions.

10. Un procédé de couplage d'une tête de coupe (1) au dispositif d'alimentation (8) à l'avant d'une moissonneuse selon une quelconque des revendications de 1 à 9, le procédé comprenant les étapes suivantes :
- positionner la tête de coupe (1) au sol,
- amener la moissonneuse vers la tête de coupe (1)
- coupler mécaniquement le châssis de tête de coupe (14) au dispositif d'alimentation (8),
- tirer le bras de support (31) vers le bas depuis ladite première position vers ladite seconde position à l'aide du mécanisme de couplage (100), et coupler de manière rotative les première et seconde pièces d'embrayage (24, 25).
